# EUROPEAN PATENT APPLICATION

(11) **EP 3 934 328 A1**
(43) Date of publication of application: **05.01.2022**
(21) Application number: 20794053.7
(22) Date of filing: 07.04.2020
(51) Int. Cl.: H04W 48/08, H04W 48/16, H04W 84/18

(54) **NETWORK RESOURCE SHARING METHOD AND RELATED APPARATUS**

(30) Priority: 22.04.2019 CN 201910324432
(71) Applicant: GUANGDONG OPPO MOBILE TELECOMMUNICATIONS CORP., LTD., Dongguan, Guangdong 523860 (CN)
(72) Inventor: YANG, Xin, Dongguan, Guangdong 523860 (CN)
(74) Representative: Manitz Finsterwald Patent- und Rechtsanwaltspartnerschaft mbB
(86) International application number: PCT/CN2020/083576
(87) International publication number: WO 2020/216059

(57) **Abstract**

A method for network resource sharing and related devices are provided. The method is applicable to an electronic device including a long range radio (LORA) communication module. The method includes the following. An access waiting duration is recorded in response to detecting an access request for a first network resource. In response to detecting that the access waiting duration is longer than a preset duration, first information is broadcasted to a plurality of LORA devices, where the plurality of LORA devices and the electronic device are in a same LORA sharing scene, and the first information includes information related to the first network resource. Second information is received from at least one LORA device among the plurality of LORA devices, where the second information indicates that the at least one LORA device and the electronic device have a same network resource access requirement. A mesh network is established with the at least one LORA device through the LORA communication module according to the second information. Share the first network resource with the at least one LORA device in the mesh network. According to the implementation, resource sharing among the multiple devices in the same LORA sharing scene can be achieved.

## Description

### TECHNICAL FIELD

This disclosure relates to the field of electronic technologies, and more particularly to a method for network resource sharing and related devices.

### BACKGROUND

When electronic devices are in some scenes, in which the number of network connections with a base station is limited and mobile network resources are also limited, if the number of devices that need to establish network connections with the base station exceeds a limit of network connection resources, the electronic device cannot successfully establish a network connection with the base station, such that it is difficult for the electronic device to use a mobile network to successfully obtain network resources to be accessed. However, the electronic device can establish, through a long range radio (LORA) communication module, a mesh network with multiple LORA devices that are in a same scene with the electronic device.

### SUMMARY

Implementations of the disclosure provide a method for network resource sharing and related devices, which can realize resource sharing among multiple devices in a same LORA sharing scene.

According to a first aspect, a method for network resource sharing is provided. The method is applicable to an electronic device including a long range radio (LORA) communication module. The method includes the following. An access waiting duration is recorded in response to detecting an access request for a first network resource. In response to detecting that the access waiting duration is longer than a preset duration, first information is broadcasted to multiple LORA devices, where the multiple LORA devices and the electronic device are in a same LORA sharing scene, and the first information includes information related to the first network resource. Second information is received from at least one LORA device among the multiple LORA devices, where the second information indicates that the at least one LORA device and the electronic device have a same network resource access requirement. A mesh network is established with the at least one LORA device through the LORA communication module according to the second information. Share the first network resource with the at least one LORA device in the mesh network.

According to a second aspect, a device for network resource sharing is provided. The device is applicable to an electronic device including a long range radio (LORA) communication module. The device includes a communication unit and a processing unit. The processing unit is configured to record an access waiting duration in response to detecting an access request for a first network resource; broadcast first information to multiple LORA devices in response to detecting that the access waiting duration is longer than a preset duration, where the multiple LORA devices and the electronic device are in a same LORA sharing scene, and the first information includes information related to the first network resource; receive second information from at least one LORA device among the multiple LORA devices, where the second information indicates that the at least one LORA device and the electronic device have a same network resource access requirement; establish a mesh network with the at least one LORA device through the LORA communication module according to the second information; share the first network resource with the at least one LORA device in the mesh network.

According to a third aspect, an electronic device is provided. The electronic device includes a processor, a communication interface, and a memory storing one or more programs. The one or more programs are configured to be performed by the processor. The one or more programs include instructions for performing any operation described in the first aspect.

According to a fourth aspect, a computer-readable storage medium is provided. The computer-readable storage medium stores computer programs for electronic data interchange. The computer programs, when executed, are operable with a computer to perform all or part of the operations described in the first aspect.

According to a fifth aspect, a computer program product is provided. The computer program product includes a non-transitory computer-readable storage medium storing computer programs. The computer programs are operable with a computer to perform all or part of the operations described in the first aspect. The computer program product can be a software installation package.

According to the method for network resource sharing provided herein, the electronic device records the access waiting duration in response to detecting the access request for the first network resource, and broadcasts the first information to the multiple LORA devices in response to detecting that the access waiting duration is longer than the preset duration, where the multiple LORA devices and the electronic device are in the same LORA sharing scene, and the first information includes the information related to the first network resource. The electronic device receives the second information from the at least one LORA device among the multiple LORA devices, where the second information indicates that the at least one LORA device and the electronic device have the same network resource access requirement. Thereafter, the electronic device establishes the mesh network with the at least one LORA device through the LORA communication module according to the second information, and shares the first network resource with the at least one LORA device in the mesh network. Since the electronic device can establish through the LORA communication module the mesh network with the at least one LORA device that is in the same LORA sharing scene and has the same network resource access requirement with the electronic device, the electronic device can obtain network resources through one LORA device in the mesh network, where the one LORA device obtains the network resources through the mobile network , so as to realize resource sharing among different LORA devices and meet network resource access requirements of devices in the mesh network.

### BRIEF DESCRIPTION OF THE DRAWINGS

To describe the technical solutions of the implementations of the disclosure or the related art more clearly, the following will give a brief description of accompanying drawings used for describing the implementations or the related art.
FIG. 1A is a reference schematic diagram illustrating a mesh network according to implementations of the disclosure.
FIG. 1B is a schematic flow chart illustrating a method for network resource sharing according to implementations of the disclosure.
FIG. 2 is a schematic flow chart illustrating a method for network resource sharing according to other implementations of the disclosure.
FIG. 3 is a schematic flow chart illustrating a method for network resource sharing according to other implementations of the disclosure.
FIG. 4 is a schematic structural diagram illustrating an electronic device according to implementations of the disclosure.
FIG. 5 is a block diagram illustrating functional units of a device for network resource sharing according to implementations of the disclosure.

### DETAILED DESCRIPTION

In order to enable those skilled in the art to better understand solutions of the disclosure, technical solutions embodied in implementations of the disclosure will be described in a clear and comprehensive manner in conjunction with the accompanying drawings. It is evident that the implementations described herein are merely some rather than all the implementations of the disclosure. All other implementations obtained by those of ordinary skill in the art based on the implementations of the disclosure without creative efforts shall fall within the protection scope of the disclosure.

Detailed descriptions are given below.

The terms "first", "second", "third", "fourth", and the like used in the specification, the claims, and the accompany drawings of the disclosure are used to distinguish different objects rather than describe a particular order. The terms "include", "comprise", and "have" as well as variants thereof are intended to cover non-exclusive inclusion. For example, a process, method, system, product, or apparatus including a series of steps or units is not limited to the listed steps or units, on the contrary, it can optionally include other steps or units that are not listed; alternatively, other steps or units inherent to the process, method, product, or apparatus can be included either.

The term "implementation" referred to herein means that a particular feature, structure, or characteristic described in conjunction with the implementation may be contained in at least one implementation of the disclosure. The phrase appearing in various places in the specification does not necessarily refer to the same implementations, nor does it refer to an independent or alternative implementation that is mutually exclusive with other implementations. It is expressly and implicitly understood by those skilled in the art that an implementation described herein may be combined with other implementations.

The electronic devices involved in the implementations of the disclosure may be electronic devices with network resource sharing capabilities and include various handheld devices, vehicle-mounted devices, wearable devices, computing devices that have wireless communication functions or other processing devices connected to wireless modems, as well as various forms of user equipment (UE), mobile stations (MS), terminal devices, and the like, and the like.

The following will describe the implementations of the disclosure in detail.

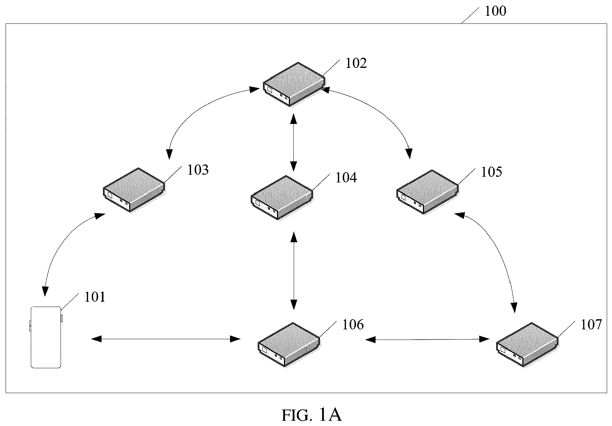

The electronic device includes a long range radio (LORA) communication module, and by means of the LORA communication module, the electronic device can establish a communication connection with a LORA device(s) through a peer-to-peer communication mode and a networking communication mode. When the electronic device operates in the networking communication mode, the electronic device can establish a mesh network with multiple LORA devices through the LORA communication module, where the electronic device and the multiple LORA devices are in a same LORA sharing scene. FIG. 1A is a reference schematic diagram illustrating a mesh network 100 according to implementations of the disclosure. As illustrated in FIG. 1A, the mesh network 100 includes an electronic device 101 and a LORA device 102, a LORA device 103, a LORA device 104, a LORA device 105, a LORA device 106, and a LORA device 107. The electronic device can communicate with any LORA device through a communication link. There are three trunk links illustrated in FIG. 1A. A first trunk link includes the electronic device 101, the LORA device 103, and the first LORA device 102. A second trunk link includes the electronic device 101, the LORA device 106, the LORA device 104, and the first LORA device 102. A third trunk link includes the electronic device 101, the LORA device 106, the LORA device 107, the LORA device 105, and the first LORA device 102. In the three trunk links, one LORA device, two LORA devices, and three LORA devices are respectively used to relay a communication request transmitted to the first LORA device 102 by the electronic device 101. In addition, for each trunk link, text interaction, voice interaction, or video interaction can be conducted on any two nodes in the trunk link. During the text interaction, a communication distance between any two nodes is generally 3 kilometers. During the voice interaction, since the voice interaction is full-duplex real-time voice communication, the communication distance between any two nodes is generally 1 kilometer, and thus each LORA device can be used as a communication node for five trunk links. For the video interaction, since the video interaction is half-duplex real-time video communication, the communication distance between any two nodes is generally 500 meters, and thus each LORA device can be used as a communication node for five trunk links.

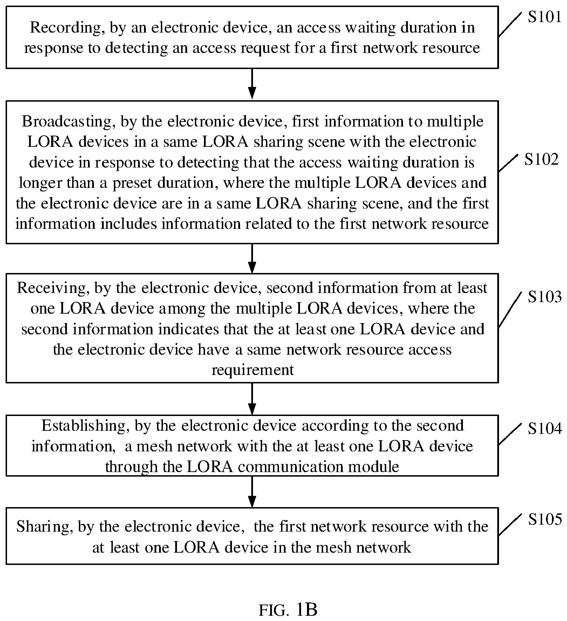

FIG. 1B is a schematic flow chart illustrating a method for network resource sharing according to implementations of the disclosure. The method is applicable to an electronic device including a LORA communication module. The method begins at S101.

At S101, the electronic device records an access waiting duration in response to detecting an access request for a first network resource.

The existing LORA technology can support peer-to-peer communication and mesh networking communication between mobile terminals or devices in places without mobile base stations. In addition, the LORA technology can also provide a relay function, that is, other LORA devices can be used to relay transmission signals between two or more LORA devices. Therefore, in case of limited mobile network resources, the electronic device can establish a mesh network with multiple LORA devices through the LORA communication module, such that a LORA device with poor network status can obtain required network resources through another LORA device with good network status. By means of the mesh network, for multiple LORA devices in the mesh network, access requests for same network resources can be met.

In one example, upon detecting the access request for the first network resource, the electronic device can record the access waiting duration. In general, the access waiting duration may be relatively short when the electronic device is in good network status, and when the electronic device is in poor network status, the access waiting duration may be relatively long. It can be understood that the access waiting duration may also be affected by other factors. When the access waiting duration is relatively long, the electronic device may be unable to access the first network resource.

At S102, upon detecting that the access waiting duration is longer than a preset duration, the electronic device broadcasts first information to multiple LORA devices, where the multiple LORA devices and the electronic device are in a same LORA sharing scene, and the first information includes information related to the first network resource.

For some crowded places, there may be many different electronic devices that want to access a same network resource(s). Therefore, the electronic device can position a current scene to determine a LORA sharing scene where the electronic device is currently located. For example, the electronic device can determine that the LORA sharing scene is a concert scene, a large-scale competition scene, a station scene, a cinema scene, or the like.

When it is detected that the access waiting duration is longer than the preset duration, the electronic device broadcasts the first information to the multiple LORA devices in the LORA sharing scene, where the first information includes the information related to the first network resource. For example, the first information includes information such as a network link of the first network resource, a name of the first network resource, and the like.

At S103, the electronic device receives second information from at least one LORA device among the multiple LORA devices, where the second information indicates that the at least one LORA device and the electronic device have a same network resource access requirement.

After the electronic device broadcasts the first information to the multiple LORA devices, the electronic device can receive the second information from the at least one LORA device among the multiple LORA devices. The at least one LORA device and the electronic device are not only in the same LORA sharing scene, but also have the same network resource access requirement, that is, the at least one LORA device and the electronic device want to access the first network resource.

At S104, the electronic device establishes, according to the second information, a mesh network with the at least one LORA device through the LORA communication module.

The electronic device can establish the mesh network with the at least one LORA device among the multiple LORA devices according to the second information. As one example, the electronic device establishes the mesh network with all the multiple LORA devices, or the electronic device establishes the mesh network with some of the multiple LORA devices.

In a wireless local area network, each terminal accesses the network via a single wireless link connected to a wireless access point (AP), and if terminals want to communicate with each other, the terminals first access a fixed AP. This network structure is known as a single-hop network. However, in a wireless mesh network, any wireless device node can act as both an AP and a router. That is, each node in the wireless mesh network can transmit and receive signals. Therefore, if a nearest AP is congested due to excessive traffic, data can be automatically rerouted to another neighboring node with less traffic for transmission. Compared with traditional switched networks, in the wireless mesh network wiring requirements among nodes is removed, but the wireless mesh network still has a redundancy mechanism and rerouting function provided by distributed networks.

At S105, the electronic device shares the first network resource with the at least one LORA device in the mesh network.

According to the method for network resource sharing provided herein, upon detecting the access request for the first network resource, the electronic device records the access waiting duration. When the electronic device detects that the access waiting duration is longer than the preset duration, the electronic device broadcasts the first information to the multiple LORA devices, where the multiple LORA devices and the electronic device are in the same LORA sharing scene, and the first information includes information related to the first network resource. The electronic device receives the second information from the at least one LORA device among the multiple LORA devices, where the second information indicates that the at least one LORA device and the electronic device have the same network resource access requirement. Thereafter, the electronic device establishes the mesh network with the at least one LORA device through the LORA communication module according to the second information, and shares the first network resource with the at least one LORA device in the mesh network. Since the electronic device can establish through the LORA communication module the mesh network with the at least one LORA device that is in the same LORA sharing scene and has the same network resource access requirement with the electronic device, the electronic device can obtain network resources through one LORA device in the mesh network, where the one LORA device obtains the network resources through the mobile network, so as to realize resource sharing among different LORA devices and meet network resource access requirements of devices in the mesh network.

In at least one implementation, the LORA sharing scene is a concert scene, and the first information is broadcasted to the multiple LORA devices that are in the same LORA sharing scene with the electronic device as follows. A preset area range associated with the concert scene is determined. The multiple LORA devices within the preset area range are searched, and at least one trunk link is established with the multiple LORA devices. The first information is broadcasted to the multiple LORA devices via the at least one trunk link.

In one example, the LORA sharing scene includes a scene where crowds are dense and there are multiple LORA devices having network access requirements, such as the concert scene, the competition scene, the station scene, the cinema scene, or the like. The LORA sharing scene can be set by a user in advance, and the scene in which the electronic device is currently located can be identified through positioning and image recognition methods. When it is detected that the electronic device is in the concert scene, the preset area range associated with the concert scene is determined, and then the multiple LORA devices within the preset area range are searched to determine the number of LORA devices. Different LORA sharing scenes are associated with different preset area ranges. An occupant density in the concert scene may be larger than that in the station scene since the preset area range associated with the concert scene may be larger than that associated with the station scene.

When the electronic device finds the multiple LORA devices within the preset area range, the electronic device can establish the at least one trunk link with the multiple LORA devices. Each trunk link may include one or more LORA devices, and thus the electronic device can broadcast the first information to the multiple LORA devices via the at least one trunk link, to enable that the multiple LORA devices all can receive the first information. In this way, there is no need for the electronic device to transmit the first information to the multiple LORA devices one by one.

As can be seen, in the implementation, after the preset area range associated with the concert scene is determined, the electronic device can search for the multiple LORA devices within the preset area range and then establish the at least one trunk link with the multiple LORA devices, such that the electronic device can transmit the first information to each of the multiple LORA devices via the at least one trunk link, which is beneficial to improving data transmission efficiency.

In at least one implementation, the second information includes network status information of each of the at least one LORA device, and the method further includes the following. A network status list is generated according to the network status information of each of the at least one LORA device and network status information of the electronic device, where the network status list indicates a network-quality ranking of the electronic device and a network-quality ranking of each of the at least one LORA device. In response to detecting that the network-quality ranking of the electronic device is lower than a preset threshold, the electronic device stops using a mobile network to access the first network resource.

In one example, the second information includes the network status information of each of the at least one LORA device, and the network status information may include information such as a network speed, a data transmission speed, and the like. The network status list is generated according to the network status information of each of the at least one LORA device and the network status information of the electronic device. The network-quality ranking of the electronic device and the network-quality ranking of each of the at least one LORA device is determined according to the network status list. If it is detected that the network-quality ranking of the electronic device is lower than the preset threshold, for example, the network-quality ranking of the electronic device is lower than the top 10 or the top 10%, it may be indicated that the network quality of the electronic device is not good. In this case, the electronic device can be controlled to stop using the mobile network to access the first network resource.

As can be seen, in the implementation, the network-quality ranking of the electronic device in at least one LORA device can be determined according to the network status information of the electronic device and the network status information of each of the at least one LORA device, so that when the network-quality ranking of the electronic device is relatively low, the electronic device can be controlled to stop accessing the first network resource. Therefore, the electronic device can obtain the first network resource through the at least one LORA device in the mesh network, which can reduce the pressure on a network server.

In at least one implementation, share the first network resource with the at least one LORA device in the mesh network as follows. Third information multicasted by at least one first target LORA device in the mesh network is received, where the third information indicates that the at least one first target LORA device successfully accesses the first network resource. The electronic device accesses the first network resource through the at least one first target LORA device.

Since the electronic device stops using the mobile network to access the first network resource, the electronic device can only obtain the first network resource through the sharing of the at least one LORA device in the mesh network. When the electronic device receives the third information multicasted by the at least one first target LORA device in the mesh network, it indicates that the at least one first target LORA device successfully accesses the first network resource. Therefore, the electronic device can access the first network resource through the at least one first target LORA device. For example, multiple devices in the mesh network are all using Youku^{®} video application and accessing a same movie resource online. After the electronic device stops accessing the movie resource, if LORA device A in the mesh network has good network status and has downloaded the movie resource, LORA device A may multicast the third information to other devices in the mesh network. After receiving the third information multicasted by LORA device A, the electronic device can access the movie through LORA device A, and other LORA devices in the mesh network can also access the movie through LORA device A.

As can be seen, in the implementation, when the at least one first target LORA device in the mesh network successfully accesses the first network resource, the at least one first target LORA device may multicast the third information to the other devices in the mesh network, so that the electronic device can access the first network resource through the at least one first target LORA device in response to reception of the third information.

In at least one implementation, access the first network resource through the at least one first target LORA device as follows. In response to detecting that the at least one first target LORA device includes multiple first target LORA devices, a current access load amount of each of the multiple first target LORA devices is determined to obtain multiple access load amounts. Access the first network resource through one of the multiple first target LORA devices, where the current access load amount of the one of the multiple first target LORA devices is a minimum access load amount among the multiple access load amounts.

Alternatively, if LORA device A and LORA device B both have good network status, LORA device A can download a part of the movie, and LORA device B can download another part of the movie. Further, LORA device A can access resources in LORA device *B,* and LORA device *B* can access resources in LORA device A. When the resources downloaded by LORA device A and LOAR device B are integrated, both LORA device A and LORA device B can broadcast the third information, and in this case the electronic device can obtain the movie resource through LORA device A or LORA device B. In particular, the electronic device can first determine an access load amount of LORA device A and an access load amount of LORA device B, since there may be other LORA devices in the mesh network that have initiated access requests to LORA device A or LORA device B, to improve the access efficiency, the electronic device can access the first network resource through an LOAR device having a smaller access load amount in LORA device A and LORA device B.

As can be seen, in the implementation, when it is detected that the electronic device can access the first network resource through multiple first target LORA devices in the mesh network, the electronic device can first determine a LORA device having the minimum access load among the first target LORA devices, and then access the first network resource through the LORA device having the minimum access load, thereby realizing the uniform distribution of resources.

In at least one implementation, share the first network resource with the at least one LORA device in the mesh network as follows. In response to detecting that the electronic device successfully accesses the first network resource through a mobile network, fourth information is multicasted to the at least one LORA device, where the fourth information is used for notifying the at least one LORA device that the electronic device successfully accesses the first network resource.

After the electronic device establishes the mesh network with the at least one LORA device, resource sharing among devices in the mesh network can be realized. Since all the electronic device and the at least one LORA device want to access the first network resource, after the electronic device successfully accesses the first network resource through the mobile network, the electronic device can transmit the fourth information to the at least one LORA device, so that the at least one LORA device can access the first network resource through the electronic device.

As can be seen, in the implementation, after the electronic device and the at least one LORA device establish the mesh network, resource sharing among the devices can be achieved. Therefore, after obtaining the first network resource, the electronic device can multicast the fourth information to the at least one LORA device, to share the first network resource to a LORA device(s) in the mesh network which has not obtained the first network resource.

In at least one implementation, the method further includes the following. Fifth information unicasted by a second target LORA device in the mesh network is received, where the fifth information includes information related to a second network resource that is to be accessed by the second target LORA device. In response to detecting that the electronic device has downloaded the second network resource, the electronic device responds to the second target LORA device and transmits the second network resource to the second target LORA device.

In one example, the electronic device transmits information by means of broadcast, multicast, or unicast. The electronic device broadcasting information means that the electronic device transmits information to any number of LORA devices in the mesh network. The electronic device multicasting information means that the electronic device transmits information to all the LORA devices in the mesh network. The electronic device unicasting information means that the electronic device transmits information to one LORA device in the mesh network.

When the electronic device receives the fifth information from the second target LORA device in the mesh network, it is indicated that the second target LORA device wants to access the second network resource. If the electronic device has downloaded the second network resource, the electronic device can directly share the second network resource to the second target LORA device.

As can be seen, in the implementation, the electronic device can not only share the first network resource through the mesh network, but can also share the downloaded second network resource to the second target LORA device in the mesh network when the electronic device receives from the second target LORA device the fifth information indicating that the second target LORA device wants to access the second network resource, thereby helping the second target LORA device to quickly obtain the second network resource.

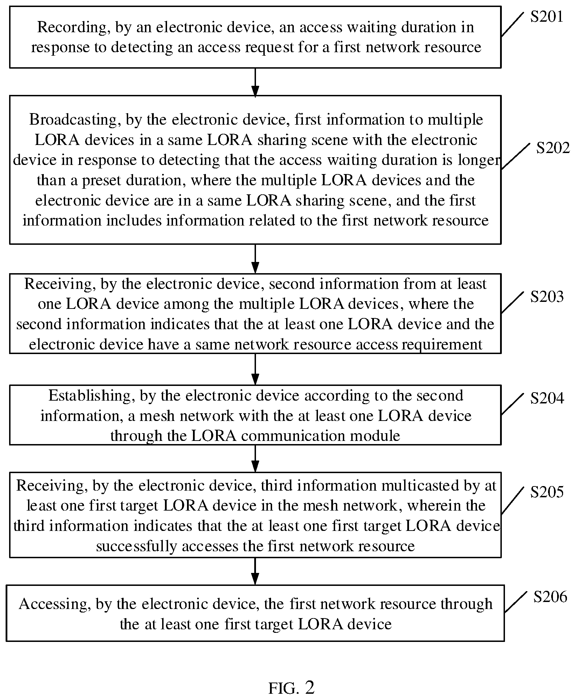

Similar to the implementations illustrated in FIG. 1B, FIG. 2 is a schematic flow chart illustrating a method for network resource sharing according to other implementations of the disclosure. The method is applicable to an electronic device including a LORA communication module. As illustrated in FIG. 2, the method begins at S201.

At S201, the electronic device records an access waiting duration in response to detecting an access request for a first network resource.

At S202, the electronic device broadcasts first information to multiple LORA devices in response to detecting that the access waiting duration is longer than a preset duration, where the multiple LORA devices and the electronic device are in a same LORA sharing scene, and the first information includes information related to the first network resource.

At S203, the electronic device receives second information from at least one LORA device among the multiple LORA devices, where the second information indicates that the at least one LORA device and the electronic device have a same network resource access requirement.

At S204, the electronic device establishes a mesh network with the at least one LORA device through the LORA communication module according to the second information.

At S205, the electronic device receives third information multicasted by at least one first target LORA device in the mesh network, where the third information indicates that the at least one first target LORA device successfully accesses the first network resource.

At S206, the electronic device accesses the first network resource through the at least one first target LORA device.

According to the method for network resource sharing provided herein, upon detecting the access request for the first network resource, the electronic device records the access waiting duration. When the electronic device detects that the access waiting duration is longer than the preset duration, the electronic device broadcasts the first information to the multiple LORA devices, where the multiple LORA devices and the electronic device are in the same LORA sharing scene, and the first information includes information related to the first network resource. The electronic device receives the second information from the at least one LORA device among the multiple LORA devices, where the second information indicates that the at least one LORA device and the electronic device have the same network resource access requirement. Thereafter, the electronic device establishes the mesh network with the at least one LORA device through the LORA communication module according to the second information, and shares the first network resource with the at least one LORA device in the mesh network. Since the electronic device can establish through the LORA communication module the mesh network with the at least one LORA device that is in the same LORA sharing scene and has the same network resource access requirement with the electronic device, the electronic device can obtain network resources through one LORA device in the mesh network, where the one LORA device obtains the network resources through the mobile network , so as to realize resource sharing among different LORA devices and meet network resource access requirements of devices in the mesh network.

In addition, when the at least one first target LORA device in the mesh network successfully accesses the first network resource, the at least one first target LORA device may multicast the third information to other devices in the mesh network, so that the electronic device can access the first network resource through the at least one first target LORA device after receiving the third information.

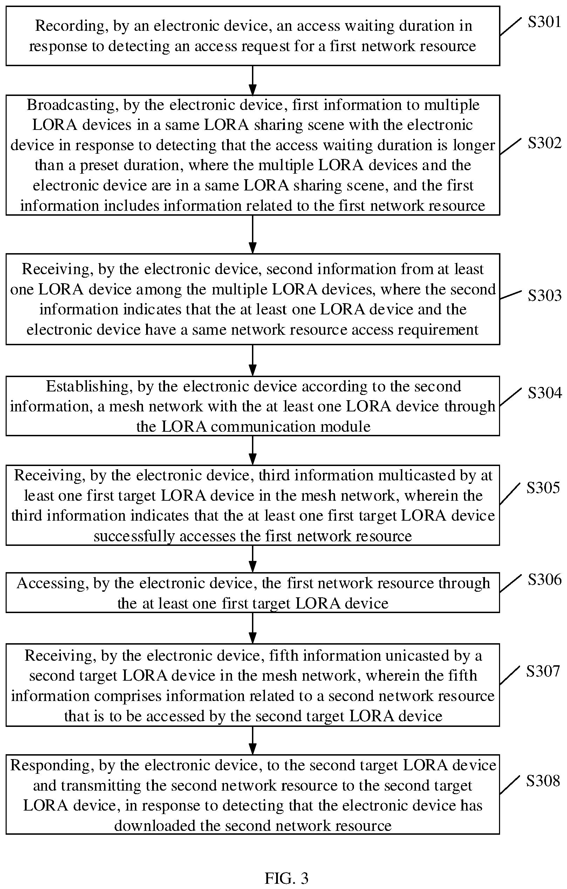

Similar to the foregoing method in FIG. 1B and FIG. 2, FIG. 3 is a schematic flow chart illustrating a method for network resource sharing according to other implementations of the disclosure. The method is applicable to an electronic device including a LORA communication module. As illustrated in FIG. 3, the method begins at S301.

At S301, the electronic device records an access waiting duration in response to detecting an access request for a first network resource.

At S302, the electronic device broadcasts first information to multiple LORA devices in response to detecting that the access waiting duration is longer than a preset duration, where the multiple LORA devices and the electronic device are in a same LORA sharing scene, and the first information includes information related to the first network resource.

At S303, the electronic device receives second information from at least one LORA device among the multiple LORA devices, where the second information indicates that the at least one LORA device and the electronic device have a same network resource access requirement.

At S304, the electronic device establishes a mesh network with the at least one LORA device through the LORA communication module according to the second information.

At S305, the electronic device receives third information multicasted by at least one first target LORA device in the mesh network, where the third information indicates that the at least one first target LORA device successfully accesses the first network resource.

At S306, the electronic device accesses the first network resource through the at least one first target LORA device.

At S307, the electronic device receives fifth information unicasted by a second target LORA device in the mesh network, where the fifth information includes information related to a second network resource that is to be accessed by the second target LORA device.

At S308, the electronic device responds to the second target LORA device and transmits the second network resource to the second target LORA device, in response to detecting that the electronic device has downloaded the second network resource.

According to the method for network resource sharing provided herein, upon detecting the access request for the first network resource, the electronic device records the access waiting duration. When the electronic device detects that the access waiting duration is longer than the preset duration, the electronic device broadcasts the first information to the multiple LORA devices, where the multiple LORA devices and the electronic device are in the same LORA sharing scene, and the first information includes information related to the first network resource. The electronic device receives the second information from the at least one LORA device among the multiple LORA devices, where the second information indicates that the at least one LORA device and the electronic device have the same network resource access requirement. Thereafter, the electronic device establishes the mesh network with the at least one LORA device through the LORA communication module according to the second information, and shares the first network resource with the at least one LORA device in the mesh network. Since the electronic device can establish through the LORA communication module the mesh network with the at least one LORA device that is in the same LORA sharing scene and has the same network resource access requirement with the electronic device, the electronic device can obtain network resources through one LORA device in the mesh network , where the one LORA device obtains the network resources through the mobile network, so as to realize resource sharing among different LORA devices and meet network resource access requirements of devices in the mesh network.

In addition, when the at least one first target LORA device in the mesh network successfully accesses the first network resource, the at least one first target LORA device may multicast the third information to other devices in the mesh network, so that the electronic device can access the first network resource through the at least one first target LORA device after receiving the third information.

Furthermore, in the implementation, the electronic device can not only share the first network resource through the mesh network, but can also share the downloaded second network resource to the second target LORA device in the mesh network when the electronic device receives from the second target LORA device the fifth information indicating that the second target LORA device wants to access the second network resource, thereby helping the second target LORA device to quickly obtain the second network resource.

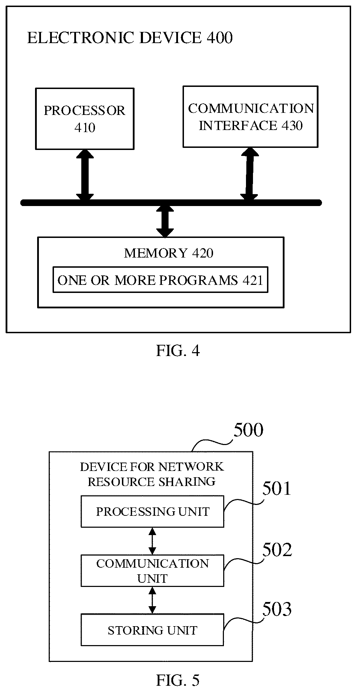

Similar to the above implementations in FIG. 1B, FIG. 2, and FIG. 3, FIG. 4 is a schematic structural diagram illustrating an electronic device 400 according to implementations of the disclosure. The electronic device 400 runs one or more applications and an operating system. As illustrated in FIG. 4, the electronic device 400 includes a processor 410, a communication interface 430, and a memory 420 storing one or more programs 421. The one or more programs 421 are configured to be performed by the processor 410. The one or more programs 421 include instructions for performing the following operations. An access waiting duration is recorded in response to detecting an access request for a first network resource. In response to detecting that the access waiting duration is longer than a preset duration, first information is broadcasted to multiple LORA devices, where the multiple LORA devices and the electronic device are in a same LORA sharing scene, and the first information includes information related to the first network resource. Second information is received from at least one LORA device among the multiple LORA devices, where the second information indicates that the at least one LORA device and the electronic device have a same network resource access requirement. A mesh network is established with the at least one LORA device through the LORA communication module according to the second information. Share the first network resource with the at least one LORA device in the mesh network.

As can be seen, in the implementation, upon detecting the access request for the first network resource, the electronic device records the access waiting duration. When the electronic device detects that the access waiting duration is longer than the preset duration, the electronic device broadcasts the first information to the multiple LORA devices, where the multiple LORA devices and the electronic device are in the same LORA sharing scene, and the first information includes information related to the first network resource. The electronic device receives the second information from the at least one LORA device among the multiple LORA devices, where the second information indicates that the at least one LORA device and the electronic device have the same network resource access requirement. Thereafter, the electronic device establishes the mesh network with the at least one LORA device through the LORA communication module according to the second information, and shares the first network resource with the at least one LORA device in the mesh network. Since the electronic device can establish through the LORA communication module the mesh network with the at least one LORA device that is in the same LORA sharing scene and has the same network resource access requirement with the electronic device, the electronic device can obtain network resources through one LORA device in the mesh network, where the one LORA device obtains the network resources through the mobile network, so as to realize resource sharing among different LORA devices and meet network resource access requirements of devices in the mesh network.

In at least one implementation, the LORA sharing scene is a concert scene, and in terms of broadcasting the first information to the multiple LORA devices that are in the same LORA sharing scene with the electronic device, instructions of the one or more programs are configured to: determine a preset area range associated with the concert scene; search for the multiple LORA devices within the preset area range, and establishing at least one trunk link with the multiple LORA devices; broadcast the first information to the multiple LORA devices via the at least one trunk link.

In at least one implementation, the second information includes network status information of each of the at least one LORA device, and instructions of the one or more programs are further configured to: generate a network status list according to the network status information of each of the at least one LORA device and network status information of the electronic device, where the network status list indicates a network-quality ranking of the electronic device and a network-quality ranking of each of the at least one LORA device; stop using a mobile network to access the first network resource in response to detecting that the network-quality ranking of the electronic device is lower than a preset threshold.

In at least one implementation, in terms of sharing the first network resource with the at least one LORA device in the mesh network, instructions of the one or more programs are configured to: receive third information multicasted by at least one first target LORA device in the mesh network, where the third information indicates that the at least one first target LORA device successfully accesses the first network resource; access the first network resource through the at least one first target LORA device.

In at least one implementation, in terms of accessing the first network resource through the at least one first target LORA device, instructions of the one or more programs are configured to: determine, in response to detecting that the at least one first target LORA device includes multiple first target LORA devices, a current access load amount of each of the multiple first target LORA devices to obtain multiple access load amounts; access the first network resource through one of the multiple first target LORA devices, where the current access load amount of the one of the multiple first target LORA devices is a minimum access load amount among the multiple access load amounts.

In at least one implementation, in terms of accessing the first network resource through the at least one first target LORA device, instructions of the one or more programs are configured to: determine, in response to detecting that the at least one first target LORA device includes multiple first target LORA devices, a current access load amount of each of the multiple first target LORA devices; access the first network resource through the multiple first target LORA devices according to the current access load amount of each of the multiple first target LORA devices.

In at least one implementation, in terms of sharing the first network resource with the at least one LORA device in the mesh network, instructions of the one or more programs are configured to: multicast fourth information to the at least one LORA device in response to detecting that the electronic device successfully accesses the first network resource through a mobile network, where the fourth information is used for notifying the at least one LORA device that the electronic device successfully accesses the first network resource.

In at least one implementation, instructions of the one or more programs are further configured to: receive fifth information unicasted by a second target LORA device in the mesh network, where the fifth information includes information related to a second network resource that is to be accessed by the second target LORA device; respond to the second target LORA device and transmit the second network resource to the second target LORA device, in response to detecting that the electronic device has downloaded the second network resource.

In at least one implementation, the LORA sharing scene includes at least one of a concert scene, a competition scene, a station scene, or a cinema scene.

The foregoing implementations mainly introduce the solution of the implementation of the disclosure from the perspective of performing the process on the method side. It can be understood that the electronic device includes corresponding hardware structures and/or software modules for performing the respective functions in order to implement the above functions. Those skilled in the art will readily appreciate that the disclosure can be implemented in hardware or a combination of hardware and computer software in combination with the elements and algorithm steps of the various examples described in the implementations disclosed herein. Whether a function is implemented in hardware or computer software to drive hardware depends on the specific application and design constraints of the solution. A person skilled in the art can use different methods for each particular application to implement the described functionality, but such implementation should not be considered to be beyond the scope of the application.

In the implementations of the disclosure, the electronic device may be divided into functional unit according to the method implementations. For example, the functional units may be divided according to various functions, or two or more functions may be integrated into one processing unit. The integrated unit can be implemented in the form of hardware or in the form of a software functional unit. It should be noted that the unit division in the implementation of the disclosure is illustrative and only a logical function division, and there can be other manners of division during actual implementations.

FIG. 5 is a block diagram illustrating functional units of a device 500 for network resource sharing according to implementations of the disclosure. The device 500 is applicable to an electronic device. The electronic device includes a processing unit 501 and a communication unit 502. The processing unit 501 is configured to: record an access waiting duration in response to detecting an access request for a first network resource; broadcast first information to multiple LORA devices in response to detecting that the access waiting duration is longer than a preset duration, where the multiple LORA devices and the electronic device are in a same LORA sharing scene, and the first information includes information related to the first network resource; receive second information from at least one LORA device among the multiple LORA devices, where the second information indicates that the at least one LORA device and the electronic device have a same network resource access requirement; establish a mesh network with the at least one LORA device through the LORA communication module according to the second information; share the first network resource with the at least one LORA device in the mesh network.

The device 500 further includes a storing unit 503. The storing unit 503 is configured to store programs and data of the electronic device. The processing unit 501 may be a processor. The communication unit 502 may be a touch screen or a transceiver, and the storage unit 503 may be a memory.

As can be seen, in the implementation, upon detecting the access request for the first network resource, the electronic device records the access waiting duration. When the electronic device detects that the access waiting duration is longer than the preset duration, the electronic device broadcasts the first information to the multiple LORA devices, where the multiple LORA devices and the electronic device are in the same LORA sharing scene, and the first information includes information related to the first network resource. The electronic device receives the second information from the at least one LORA device among the multiple LORA devices, where the second information indicates that the at least one LORA device and the electronic device have the same network resource access requirement. Thereafter, the electronic device establishes the mesh network with the at least one LORA device through the LORA communication module according to the second information, and shares the first network resource with the at least one LORA device in the mesh network. Since the electronic device can establish through the LORA communication module the mesh network with the at least one LORA device that is in the same LORA sharing scene and has the same network resource access requirement with the electronic device, the electronic device can obtain network resources through one LORA device in the mesh network, where the one LORA device obtains the network resources through the mobile network, so as to realize resource sharing among different LORA devices and meet network resource access requirements of devices in the mesh network.

In at least one implementation, the LORA sharing scene is a concert scene, and the processing unit 501 configured to broadcast the first information to the multiple LORA devices that are in the same LORA sharing scene with the electronic device is configured to: determine a preset area range associated with the concert scene; search for the multiple LORA devices within the preset area range, and establishing at least one trunk link with the multiple LORA devices; broadcast the first information to the multiple LORA devices via the at least one trunk link.

In at least one implementation, the second information includes network status information of each of the at least one LORA device, and the processing unit 501 is further configured to: generate a network status list according to the network status information of each of the at least one LORA device and network status information of the electronic device, where the network status list indicates a network-quality ranking of the electronic device and a network-quality ranking of each of the at least one LORA device; stop using a mobile network to access the first network resource in response to detecting that the network-quality ranking of the electronic device is lower than a preset threshold.

In at least one implementation, the processing unit 501 configured to share the first network resource with the at least one LORA device in the mesh network is configured to: receive third information multicasted by at least one first target LORA device in the mesh network, where the third information indicates that the at least one first target LORA device successfully accesses the first network resource; access the first network resource through the at least one first target LORA device.

In at least one implementation, the processing unit 501 configured to access the first network resource through the at least one first target LORA device is configured to: determine, in response to detecting that the at least one first target LORA device includes multiple first target LORA devices, a current access load amount of each of the multiple first target LORA devices to obtain multiple access load amounts; access the first network resource through one of the multiple first target LORA devices, where the current access load amount of the one of the multiple first target LORA devices is a minimum access load amount among the multiple access load amounts.

In at least one implementation, the processing unit 501 configured to access the first network resource through the at least one first target LORA device is configured to: determine, in response to detecting that the at least one first target LORA device includes multiple first target LORA devices, a current access load amount of each of the multiple first target LORA devices; access the first network resource through the multiple first target LORA devices according to the current access load amount of each of the multiple first target LORA devices.

In at least one implementation, the processing unit 501 configured to share the first network resource with the at least one LORA device in the mesh network is configured to: multicast fourth information to the at least one LORA device in response to detecting that the electronic device successfully accesses the first network resource through a mobile network, where the fourth information is used for notifying the at least one LORA device that the electronic device successfully accesses the first network resource.

In at least one implementation, the processing unit 501 is further configured to: receive fifth information unicasted by a second target LORA device in the mesh network, where the fifth information includes information related to a second network resource that is to be accessed by the second target LORA device; respond to the second target LORA device and transmit the second network resource to the second target LORA device, in response to detecting that the electronic device has downloaded the second network resource.

In at least one implementation, the LORA sharing scene includes at least one of a concert scene, a competition scene, a station scene, or a cinema scene.

Implementations of the disclosure also provide a computer storage medium. The computer storage medium is configured to store computer programs for electronic data interchange. The computer programs, when executed, are operable with a computer to perform all or part of the operations of any of the methods described in the above-described method implementation. The computer includes an electronic device.

Implementations of the disclosure also provide a computer program product. The computer program product includes a non-transitory computer-readable storage medium storing computer programs. The computer programs are operable with a computer to perform all or part of the operations of any of the methods described in the above method implementations. The computer program product may be a software installation package. The computer may be an electronic device.

It is to be noted that, for the sake of simplicity, the foregoing method implementations are described as a series of action combinations, however, it will be appreciated by those skilled in the art that the disclosure is not limited by the sequence of actions described. According to the disclosure, certain steps or operations may be performed in other order or simultaneously. Besides, it will be appreciated by those skilled in the art that the implementations described in the specification are exemplary implementations and the actions and modules involved are not necessarily essential to the disclosure.

In the foregoing implementations, the description of each implementation has its own emphasis. For the parts not described in detail in one implementation, reference may be made to related descriptions in other implementations.

In the implementations of the disclosure, it should be understood that, the device/apparatus disclosed in implementations provided herein may be implemented in other manners. For example, the device/apparatus implementations described above are merely illustrative; for instance, the division of the unit is only a logical function division and there can be other manners of division during actual implementations, for example, multiple units or components may be combined or may be integrated into another system, or some features may be ignored or not performed. In addition, coupling or communication connection between each illustrated or discussed component may be direct coupling or communication connection, or may be indirect coupling or communication connection among devices or units via some interfaces, and may be electrical connection, or other forms of connection.

The units described as separate components may or may not be physically separated, the components illustrated as units may or may not be physical units, that is, they may be in the same place or may be distributed to multiple network elements. All or part of the units may be selected according to actual needs to achieve the purpose of the technical solutions of the implementations.

In addition, the functional units in various implementations of the disclosure may be integrated into one processing unit, or each unit may be physically present, or two or more units may be integrated into one unit. The above-mentioned integrated unit can be implemented in the form of hardware or a software function unit.

The integrated unit may be stored in a computer-readable memory when it is implemented in the form of a software functional unit and is sold or used as a separate product. Based on such understanding, the technical solutions of the disclosure essentially, or the part of the technical solutions that contributes to the related art, or all or part of the technical solutions, may be embodied in the form of a software product which is stored in a memory and includes instructions for causing a computer device (which may be a personal computer, a server, or a network device and so on) to perform all or part of the steps described in the various implementations of the disclosure. The memory includes various medium capable of storing program codes, such as a universal serial bus (USB) flash disk, a read-only memory (ROM), a RAM, a removable hard disk, a disk, a CD, or the like.

It will be understood by those of ordinary skill in the art that all or a part of the various methods of the implementations described above may be accomplished by means of a program to instruct associated hardware, the program may be stored in a computer-readable memory, which may include a flash memory, a ROM, a RAM, a disk or a CD, and so on.

The foregoing illustrates the implementations of the disclosure in detail. The principle and implementations of the disclosure are illustrated by specific examples. The illustration of the above implementations is merely used to facilitate understanding of the methods and core concept of the disclosure. For a person skilled in the art, according to the concept of the disclosure, specific implementations and application ranges may be both changed. Based on the above, the disclosure shall not be understood to be limited to the specification.

## Claims

1. A method for network resource sharing, being applicable to an electronic device comprising a long range radio (LORA) communication module, the method comprising:
recording an access waiting duration in response to detecting an access request for a first network resource;
broadcasting first information to a plurality of LORA devices in response to detecting that the access waiting duration is longer than a preset duration, wherein the plurality of LORA devices and the electronic device are in a same LORA sharing scene, and the first information comprises information related to the first network resource;
receiving second information from at least one LORA device among the plurality of LORA devices, wherein the second information indicates that the at least one LORA device and the electronic device have a same network resource access requirement;
establishing a mesh network with the at least one LORA device through the LORA communication module according to the second information; and
sharing the first network resource with the at least one LORA device in the mesh network.

2. The method of claim 1, wherein the LORA sharing scene is a concert scene, and broadcasting the first information to the plurality of LORA devices that are in the same LORA sharing scene with the electronic device comprises:
determining a preset area range associated with the concert scene;
searching for the plurality of LORA devices within the preset area range, and establishing at least one trunk link with the plurality of LORA devices; and
broadcasting the first information to the plurality of LORA devices via the at least one trunk link.

3. The method of claim 1, wherein the second information comprises network status information of each of the at least one LORA device, and the method further comprises:
generating a network status list according to the network status information of each of the at least one LORA device and network status information of the electronic device, wherein the network status list indicates a network-quality ranking of the electronic device and a network-quality ranking of each of the at least one LORA device; and
stopping using a mobile network to access the first network resource in response to detecting that the network-quality ranking of the electronic device is lower than a preset threshold.

4. The method of any of claims 1 to 3, wherein sharing the first network resource with the at least one LORA device in the mesh network comprises:
receiving third information multicasted by at least one first target LORA device in the mesh network, wherein the third information indicates that the at least one first target LORA device successfully accesses the first network resource; and
accessing the first network resource through the at least one first target LORA device.

5. The method of claim 4, wherein accessing the first network resource through the at least one first target LORA device comprises:
determining, in response to detecting that the at least one first target LORA device comprises a plurality of first target LORA devices, a current access load amount of each of the plurality of first target LORA devices to obtain a plurality of access load amounts; and
accessing the first network resource through one of the plurality of first target LORA devices, wherein the current access load amount of the one of the plurality of first target LORA devices is a minimum access load amount among the plurality of access load amounts.

6. The method of claim 4, wherein accessing the first network resource through the at least one first target LORA device comprises:
determining, in response to detecting that the at least one first target LORA device comprises a plurality of first target LORA devices, a current access load amount of each of the plurality of first target LORA devices; and
accessing the first network resource through the plurality of first target LORA devices according to the current access load amount of each of the plurality of first target LORA devices.

7. The method of claim 1, wherein sharing the first network resource with the at least one LORA device in the mesh network comprises:
multicasting fourth information to the at least one LORA device in response to detecting that the electronic device successfully accesses the first network resource through a mobile network, wherein the fourth information is used for notifying the at least one LORA device that the electronic device successfully accesses the first network resource.

8. The method of claim 1, further comprising:
receiving fifth information unicasted by a second target LORA device in the mesh network, wherein the fifth information comprises information related to a second network resource that is to be accessed by the second target LORA device; and
responding to the second target LORA device and transmitting the second network resource to the second target LORA device, in response to detecting that the electronic device has downloaded the second network resource.

9. The method of claim 1, wherein the LORA sharing scene comprises at least one of a concert scene, a competition scene, a station scene, or a cinema scene.

10. A device for network resource sharing, being applicable to an electronic device comprising a long range radio (LORA) communication module, the device comprising:
a communication unit; and
a processing unit configured to:
record an access waiting duration in response to detecting an access request for a first network resource;
broadcast first information to a plurality of LORA devices in response to detecting that the access waiting duration is longer than a preset duration, wherein the plurality of LORA devices and the electronic device are in a same LORA sharing scene, and the first information comprises information related to the first network resource;
receive second information from at least one LORA device among the plurality of LORA devices, wherein the second information indicates that the at least one LORA device and the electronic device have a same network resource access requirement;
establish a mesh network with the at least one LORA device through the LORA communication module according to the second information; and
share the first network resource with the at least one LORA device in the mesh network.

11. The device of claim 10, wherein the LORA sharing scene is a concert scene, and the processing unit configured to broadcast the first information to the plurality of LORA devices that are in the same LORA sharing scene with the electronic device is configured to:
determine a preset area range associated with the concert scene;
search for the plurality of LORA devices within the preset area range, and establishing at least one trunk link with the plurality of LORA devices; and
broadcast the first information to the plurality of LORA devices via the at least one trunk link.

12. The device of claim 10, wherein the second information comprises network status information of each of the at least one LORA device, and the processing unit is further configured to:
generate a network status list according to the network status information of each of the at least one LORA device and network status information of the electronic device, wherein the network status list indicates a network-quality ranking of the electronic device and a network-quality ranking of each of the at least one LORA device; and
stop using a mobile network to access the first network resource in response to detecting that the network-quality ranking of the electronic device is lower than a preset threshold.

13. The device of any of claims 10 to 12, wherein the processing unit configured to share the first network resource with the at least one LORA device in the mesh network is configured to:
receive third information multicasted by at least one first target LORA device in the mesh network, wherein the third information indicates that the at least one first target LORA device successfully accesses the first network resource; and
access the first network resource through the at least one first target LORA device.

14. The device of claim 13, wherein the processing unit configured to access the first network resource through the at least one first target LORA device is configured to:
determine, in response to detecting that the at least one first target LORA device comprises a plurality of first target LORA devices, a current access load amount of each of the plurality of first target LORA devices to obtain a plurality of access load amounts; and
access the first network resource through one of the plurality of first target LORA devices, wherein the current access load amount of the one of the plurality of first target LORA devices is a minimum access load amount among the plurality of access load amounts.

15. The device of claim 13, wherein the processing unit configured to access the first network resource through the at least one first target LORA device is configured to:
determine, in response to detecting that the at least one first target LORA device comprises a plurality of first target LORA devices, a current access load amount of each of the plurality of first target LORA devices; and
access the first network resource through the plurality of first target LORA devices according to the current access load amount of each of the plurality of first target LORA devices.

16. The device of claim 10, wherein the processing unit configured to share the first network resource with the at least one LORA device in the mesh network is configured to:
multicast fourth information to the at least one LORA device in response to detecting that the electronic device successfully accesses the first network resource through a mobile network, wherein the fourth information is used for notifying the at least one LORA device that the electronic device successfully accesses the first network resource.

17. The device of claim 10, wherein the processing unit is further configured to:
receive fifth information unicasted by a second target LORA device in the mesh network, wherein the fifth information comprises information related to a second network resource that is to be accessed by the second target LORA device; and
respond to the second target LORA device and transmit the second network resource to the second target LORA device, in response to detecting that the electronic device has downloaded the second network resource.

18. The device of claim 10, wherein the LORA sharing scene comprises at least one of a concert scene, a competition scene, a station scene, or a cinema scene.

19. An electronic device, comprising:
a processor;
a communication interface; and
a memory storing one or more programs, wherein the one or more programs are configured to be executed by the processor and comprise instructions for performing the method of any of claims 1 to 9.

20. A computer-readable storage medium storing computer programs for electronic interchange, wherein the computer programs, when executed by a computer, are operable with the computer to perform the method of any of claims 1 to 9.
